# NEUE EUROPÄISCHE PATENTSCHRIFT

(11) **EP 3 135 569 B2**
(45) Veröffentlichungstag und Bekanntmachung des Hinweises auf die Entscheidung über den Einspruch: **10.04.2024**
(45) Hinweis auf die Patenterteilung: 06.11.2019
(21) Anmeldenummer: 16183954.3
(22) Anmeldetag: 12.08.2016
(51) Int. Cl.: B62D 59/04

(54) **VERFAHREN ZUM BETREIBEN EINES HILFSANTRIEBS FÜR EINEN ANHÄNGER SOWIE SYSTEM ZUM ANTREIBEN WENIGSTENS EINES RADS EINES SOLCHEN ANHÄNGERS**
METHOD FOR OPERATING AN AUXILIARY DRIVE FOR A TRAILER, AND SYSTEM FOR DRIVING AT LEAST ONE WHEEL OF SUCH A TRAILER
PROCÉDÉ DE FONCTIONNEMENT D'UN ENTRAÎNEMENT AUXILIAIRE POUR UNE REMORQUE ET SYSTÈME D'ENTRAINEMENT D'AU MOINS UNE ROUE D'UNE TELLE REMORQUE

(30) Priorität: 28.08.2015 DE 102015114308
(43) Veröffentlichungstag der Anmeldung: 01.03.2017
(73) Patentinhaber: Reich GmbH, Regel- und Sicherheitstechnik, 35713 Eschenburg-Wissenbach (DE)
(72) Erfinder: Theiß, Marc André, 35687 Dillenburg (DE); Bender, Steffen, 35713 Eschenburg (DE)
(74) Vertreter: Hofstetter, Schurack & Partner

(56) Entgegenhaltungen:
- EP-A2- 1 679 251
- WO-A2-2013/053776
- DE-A1- 10 346 888
- DE-A1-102012 007 986
- DE-A1-102012 008 858
- DE-U1-202012 006 089
- US-A1- 2014 336 793

## Beschreibung

Die vorliegende Erfindung betrifft ein Verfahren zum Betreiben eines Hilfsantriebs für einen Anhänger, insbesondere einen Wohnwagen, einen Bootsanhänger, einen Verkaufswagen, einen Transportanhänger oder einen Autotransportanhänger, sowie ein System zum Antreiben wenigstens eines Rads eines solchen Anhängers.

Hilfsantriebe für Anhänger, insbesondere für Wohnwagen, Bootsanhänger, Verkaufswagen, Transportanhänger und ähnliche Anhänger sind aus dem allgemeinen Stand der Technik bereits hinlänglich bekannt. Ein solcher Hilfsantrieb dient insbesondere dazu, den Anhänger in einem Zustand, in welchem der Anhänger von einer Zugmaschine abgekoppelt ist, zu bewegen. Dies ist besonders vorteilhaft bei Anhängern, die beispielsweise auf Campingplätzen oder Wohnwagen-Parkplätzen bewegt und dabei rangiert werden müssen. Bei einem solchen bekannten Hilfsantrieb ist wenigstens ein Antriebselement mit zumindest einem Rad des Anhängers in Zusammenwirken bringbar. Bei dem Antriebselement handelt es sich beispielsweise um einen Antriebswalze des Hilfsantriebs, wobei die Antriebswalze beispielsweise in Kontakt mit dem Rad bewegt und in Kontakt gehalten wird. Mithilfe wenigstens eines Motors, insbesondere eines Elektromotors, des Hilfsantriebs wird die Antriebswalze angetrieben, wodurch das sich in Zusammenwirken mit der Antriebswalze befindende Rad gedreht beziehungsweise bewegt wird. Dadurch kann der Anhänger in abgekoppeltem Zustand präzise rangiert werden.

Die DE 20 2012 006 089 U1 offenbart ein Rangiersystem für einen Anhänger, mit wenigstens zwei an dem Anhänger anordenbaren Rangierantrieben mit je einer Antriebsrolle, wobei jede Antriebsrolle an je ein Rad des Anhängers anstellbar ist, um dieses anzutreiben.

Aus der DE 103 46 888 A1 ist eine Fernsteuereinheit zum ferngesteuerten Einparken eines Kraftfahrzeugs bekannt, mit einem Gehäuse sowie mit Elementen zum Betätigen.

Außerdem ist der DE 10 2012 007 986 A1 ein Rangiersystem zum automatisierten Rangieren eines Kraftfahrzeugs als bekannt zu entnehmen, mit einer fahrzeugseitigen Steuereinrichtung, die dazu ausgelegt ist, Steuersignale an eine Antriebs- und/oder Lenkvorrichtung des Kraftfahrzeugs abzugeben und hierdurch einen Rangiervorgang des Kraftfahrzeugs selbsttätig durchzuführen.

Außerdem offenbart die EP 1 790 555 A1 eine Anordnung zum Manövrieren eines Anhängers mit zwei Rädern auf jeder Seite. Ferner ist der DE 20 2012 006 089 U1 ein Rangierantrieb für einen Anhänger als bekannt zu entnehmen. Darüber hinaus offenbart die US 2014/0338793 A1 ein Verfahren, bei dem ein Computergerät mit drahtloser Steuerung eines Betriebs eines Bediengeräts bereitgestellt wird.

Aufgabe der vorliegenden Erfindung ist es, ein Verfahren ein System zu schaffen, mittels welchen ein Anhänger auf besonders einfache und sichere Weise bewegt, insbesondere rangiert, werden kann.

Diese Aufgabe wird erfindungsgemäß durch ein Verfahren mit den Merkmalen des Patentanspruchs 1 sowie durch ein System mit den Merkmalen des Patentanspruchs 6 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines Hilfsantriebs für einen Anhänger, insbesondere einen Wohnwagen, einen Bootsanhänger, einen Verkaufswagen, einen Transportanhänger oder einen Autotransportanhänger. Bei dem Verfahren stellt zumindest ein mit dem Hilfsantrieb über eine drahtlose Kommunikationsverbindung verbundenes mobiles Endgerät wenigstens ein Funktionsbedienelement bereit, mittels welchem wenigstens eine Funktion des Hilfsantriebs von einem Nutzer beziehungsweise einer Person über das mobile Endgerät und die drahtlose Verbindung bewirkbar ist.

Ferner stellt das mobile Endgerät wenigstens ein von dem Funktionsbedienelement unterschiedliches Sicherheitsbedienelement bereit, wobei das Funktionsbedienelement in Abhängigkeit von wenigstens einer durch den Nutzer bewirkten Betätigung beziehungsweise Bedienung des Sicherheitsbedienelements für das Bewirken der wenigstens einen Funktion freigegeben wird. Mit anderen Worten dient das Funktionsbedienelement grundsätzlich dazu, die wenigstens eine Funktion des Hilfsantriebs zu bewirken. Hierzu bedient beziehungsweise betätigt der Nutzer das Funktionsbedienelement, indem der Nutzer das Funktionsbedienelement beispielsweise berührt und insbesondere drückt.

Bei der wenigstens einen Funktion handelt es sich beispielsweise um eine Antriebsfunktion, in deren Rahmen wenigstens ein Rad, das heißt ein Bodenkontaktelement des Anhängers mittels des Hilfsantriebs gedreht und somit bewegt wird. Da der Anhänger beispielsweise über das Rad auf einer Fahrbahn beziehungsweise einem Boden abgestützt ist, wird der Anhänger durch das Antreiben beziehungsweise Drehen des Rades angetrieben beziehungsweise bewegt und kann somit beispielsweise rangiert werden. Insbesondere kann der Anhänger dadurch in seinem abgekoppelten Zustand rangiert werden, in welchem der Anhänger nicht mit einer Zugmaschine gekoppelt ist.

Ferner kann es sich bei der wenigstens einen Funktion um eine sogenannte Einschwenkfunktion handeln, in deren Rahmen wenigstens ein Antriebselement wie beispielsweise eine Antriebswalze des Hilfsantriebs in Zusammenwirken und dabei beispielsweise in Kontakt mit wenigstens einem Rad des Anhängers bewegt wird.

Im Rahmen des erfindungsgemäßen Verfahrens ist es nun vorgesehen, dass der Hilfsantrieb die wenigstens eine Funktion dann und vorzugsweise nur dann ausführt, wenn das Funktionsbedienelement für das Bewirken der wenigstens einen Funktion freigegeben wird beziehungsweise ist. Das Funktionsbedienelement wird dabei freigegeben, indem der Nutzer das Sicherheitsbedienelement bedient beziehungsweise betätigt und dabei beispielsweise berührt und insbesondere drückt. Dies bedeutet beispielsweise, dass das Funktionsbedienelement grundsätzlich beziehungsweise in einem Ausgangszustand oder Grundzustand hinsichtlich des Bewirkens der wenigstens einen Funktion gesperrt oder deaktiviert ist. Befindet sich das Funktionsbedienelement in diesem Ausgangszustand oder Grundzustand und betätigt der Nutzer das Funktionsbedienelement, Funktionsbedienelement in dem Aktivzustand und betätigt der Nutzer das Funktionsbedienelement, während sich das Funktionsbedienelement in dem Ausgangszustand befindet, so führt der Hilfsantrieb die wenigstens eine Funktion nicht aus. Mit anderen Worten unterbleibt dann ein Ausführen der wenigstens einen Funktion durch den Hilfsantrieb.

Betätigt der Nutzer das Sicherheitsbedienelement, so wird beispielsweise ein Aktivzustand des Funktionsbedienelements eingestellt beziehungsweise aktiviert. Mit anderen Worten wird das Funktionsbedienelement in einen Aktivzustand überführt. Befindet sich das Funktionsbedienelement in dem Aktivzustand und betätigt der Nutzer das Funktionsbedienelement, während sich das Funktionsbedienelement in dem Aktivzustand befindet, so wird die wenigstens eine Funktion bewirkt beziehungsweise der Hilfsantrieb führt die wenigstens eine Funktion aus. Dies bedeutet, dass der Hilfsantrieb die wenigstens eine Funktion dann und vorzugsweise nur dann ausführt, wenn sich das Funktionsbedienelement in dem Aktivzustand befindet, was wiederum dadurch bewirkt wird, dass das Sicherheitsbedienelement betätigt wird. Hierdurch können ein besonders sicherer Betrieb des Hilfsantriebs sowie ein sicheres Antreiben und somit Rangieren des Anhängers realisiert werden, da beispielsweise ein unbeabsichtigtes und ungewünschtes Auslösen der wenigstens einen Funktion vermieden werden kann.

Das Sicherheitsbedienelement fungiert dabei sozusagen als Totmannschalter um sicherzustellen, dass sowohl das Funktionsbedienelement als auch das Sicherheitsbedienelement jeweils wenigstens einmal betätigt werden müssen, um die wenigstens eine Funktion tatsächlich zu bewirken. Dadurch können beispielsweise ungewollt und unbeabsichtigt durch den Nutzer bewirkte Betätigungen des Funktionsbedienelements von gewollten beziehungsweise beabsichtigten Betätigungen unterschieden werden, da der Nutzer beispielsweise bei ungewollten beziehungsweise unbeabsichtigten Betätigungen das Funktionsbedienelement, nicht jedoch das Sicherheitsbedienelement betätigt. Bei beabsichtigten und gewünschten jedoch betätigt der Nutzer sowohl das Funktionsbedienelement als auch das Sicherheitsbedienelement. In der Folge ist es beispielsweise möglich, die Gefahr, dass es zu unerwünschten Ausführungen der wenigstens einen Funktion kommt, wenn der Nutzer das mobile Endgerät handhabt und dabei beispielsweise verstaut beziehungsweise in seine Tasche steckt, besonders gering zu halten.

Das mobile Endgerät ist beispielsweise eine einfache Fernbedienung, welche beispielsweise lediglich die Funktion hat, den Hilfsantrieb fernzusteuern. Vorzugsweise handelt es sich bei dem mobilen Endgerät jedoch beispielsweise um ein mobiles Kommunikationsendgerät wie beispielsweise ein Handy oder ein Smartphone, welches zum Fernbedienen des Hilfsantriebs genutzt wird. Ein solches mobiles Kommunikationsendgerät kann beispielsweise ferner dazu genutzt werden, Telefongespräche zu führen. Ferner ist es denkbar, dass es sich bei dem mobilen Endgerät um ein Tablet beziehungsweise einen Tablet-PC, einen Laptop, ein Notebook oder dergleichen handelt.

Es ist möglich, dass das Funktionsbedienelement infolge wenigstens einer durch den Nutzer bewirkten Betätigung des Sicherheitsbedienelements aus dem Grundzustand in den Aktivzustand überführt und während einer sich an die Betätigung des Sicherheitsbedienelements beziehungsweise während einer sich an ein Beenden der Betätigung des Sicherheitsbedienelements anschließenden Zeitdauer in dem Aktivzustand gehalten wird. Bei dieser Zeitdauer handelt es sich beispielsweise um wenigstens zwei Sekunden. Dies bedeutet, dass sich das Funktionsbedienelement - vorrübergehend, nämlich während der vorgebbaren Zeitdauer - auch dann in dem Aktivzustand befindet, wenn das Sicherheitsbedienelement nicht mehr durch den Nutzer betätigt wird. Somit kann die wenigstens eine Funktion durch Betätigen des Funktionsbedienelements während der vorgebbaren Zeitdauer auch dann bewirkt werden, wenn das Sicherheitsbedienelement nicht durch den Nutzer betätigt wird.

Erfindungsgemäß ist es vorgesehen, dass das Sicherheitsbedienelement als Bedienfläche auf einem berührungsempfindlichen Bildschirm des mobilen Endgeräts bereitgestellt wird. Dabei gelten die zu dem als Bedienfläche ausgebildeten Funktionsbedienelement geschilderten Ausgestaltungen und Vorteile auch für das als Bedienfläche ausgebildete Sicherheitsbedienelement und umgekehrt. Berührt somit der Nutzer den berührungsempfindlichen Bildschirm im Bereich des als Bedienfläche ausgebildeten Sicherheitsbedienelements, so kann eine durch den Nutzer bewirkte Betätigung des Sicherheitsbedienelements mittels des berührungsempfindlichen Bildschirms sicher erfasst werden. Berührt der Nutzer des berührungsempfindlichen Bildschirm nicht mehr beziehungsweise überschreitet der Abstand zwischen dem Nutzer und dem berührungsempfindlichen Bildschirm des vorgebbaren Schwellenwert, so wird dadurch ein Beenden der Betätigung des Funktionsbedienelements beziehungsweise des Sicherheitsbedienelements erfasst. Beendet somit der Nutzer die Betätigung des Sicherheitsbedienelements und/oder des Funktionsbedienelements, so wird das Ausführen der wenigstens einen Funktion gestoppt.

Bei der Erfindung ist es vorgesehen, dass eine durch den Nutzer bewirkte Betätigung des freigegebenen, das heißt sich in dem Aktivzustand befindenden Funktionsbedienelements mittels wenigstens eines Symbols auf einer Anzeige des mobilen Endgeräts angezeigt wird. Hierdurch wird dem Nutzer optisch kommuniziert, dass er das Funktionsbedienelement tatsächlich betätigt, um die wenigstens eine Funktion tatsächlich zu bewirken. Insgesamt ist es somit möglich, dem Nutzer den Betrieb des Hilfsantriebs optisch zu kommunizieren, so dass sich ein besonders sicherer Betrieb realisieren lässt.

Bei der Erfindung ist es auch vorgesehen, dass die durch den Nutzer bewirkte Betätigung des freigegebenen Funktionsbedienelements mittels des wenigstens einen Symbols in einem vom Funktionsbedienelement und vom Sicherheitsbedienelement unterschiedlichen Bereich des mobilen Endgeräts angezeigt wird. Diesen Merkmalen liegt die Idee zugrunde, dass der Nutzer das Sicherheitsbedienelement und das Funktionsbedienelement beispielsweise mithilfe jeweils eines Fingers betätigt, so dass das Sicherheitsbedienelement und das Funktionsbedienelement bei ihrer jeweiligen Betätigung durch den jeweiligen Finger zumindest teilweise, zumindest überwiegend oder vollständig überdeckt sind. Da nun jedoch die durch den Nutzer bewirkte Betätigung des freigegebenen Funktionsbedienelements in dem vom Funktionsbedienelement und vom Sicherheitsbedienelement unterschiedlichen Bereich angezeigt wird, kann dem Nutzer auch dann, wenn der Nutzer mit seinen Fingern das Funktionsbedienelement und das Sicherheitsbedienelement überdeckt, sicher optisch kommuniziert werden, dass er sowohl das Sicherheitsbedienelement als auch das Funktionsbedienelement betätigt und somit die wenigstens eine Funktion tatsächlich bewirkt. Insbesondere ist es möglich, dem Nutzer mittels des wenigstens einen Symbols eine Art der wenigstens einen Funktion optisch zu kommunizieren, so dass dem Nutzer beispielsweise anhand des Symbols eine mittels der Funktion bewirkte Bewegung des Anhängers angezeigt werden kann. Dadurch kann der Nutzer den Anhänger über die drahtlose Kommunikationsverbindung und das mobile Endgerät besonders einfach und sicher bewegen und rangieren.

Die jeweiligen Betätigungen des Funktionsbedienelements und des Sicherheitsbedienelements werden mittels des mobilen Endgeräts erfasst und stellen insbesondere Eingaben in das mobile Endgerät dar.

Als besonders vorteilhaft hat es sich jedoch gezeigt, wenn das Funktionsbedienelement freigegeben wird, während der Nutzer das Sicherheitsbedienelement betätigt hält, wobei das Funktionsbedienelement für das Bewirken der wenigstens einen Funktion gesperrt wird, während eine durch den Nutzer bewirkte Betätigung des Sicherheitsbedienelements unterbleibt. Dies bedeutet, dass sich das Funktionsbedienelement so lange und nur so lange in dem Aktivzustand befindet, wie der Nutzer das Sicherheitsbedienelement betätigt beziehungsweise eine durch den Nutzer bewirkte Betätigung des Bedienelements erfasst wird. Der Nutzer muss somit sowohl das Funktionsbedienelement als auch das Sicherheitsbedienelement gleichzeitig betätigen, um die wenigstens eine Funktion tatsächlich zu bewirken. Mit anderen Worten führt der Hilfsantrieb die wenigstens eine Funktion dann und vorzugsweise nur dann aus, wenn eine gleichzeitige, durch den Nutzer bewirkte Betätigung des Sicherheitsbedienelements und des Funktionsbedienelements mittels des mobilen Endgeräts erfasst wird.

Der Nutzer muss somit beispielsweise mithilfe zweier Finger einer Hand oder aber mithilfe wenigstens eines Fingers seiner ersten Hand und mithilfe wenigstens eines Fingers seiner zweiten Hand das Funktionsbedienelement und das Sicherheitsbedienelementgleichzeitig bestätigen, um die wenigstens eine Funktion tatsächlich zu bewirken. Dadurch kann ein besonders sicherer Betrieb des Hilfsantriebs realisiert werden, da beispielsweise die Gefahr, dass die Hände des Nutzers zwischen sich bewegende Bauteile gelangen, besonders gering gehalten werden kann. Insbesondere kann dadurch die Gefahr von unbeabsichtigtem Auslösen von Funktionen des Hilfsantriebs besonders gering gehalten werden, wenn der Nutzer beispielsweise das mobile Endgerät in seine Tasche steckt.

Als besonders vorteilhaft hat es sich gezeigt, wenn das Funktionsbedienelement unmittelbar nach einem Beenden einer durch den Nutzer bewirkten Betätigung des Sicherheitsbedienelements gesperrt, das heißt in den Grundzustand geschaltet oder überführt wird. Darunter ist zu verstehen, dass das Funktionsbedienelement aus dem Aktivzustand in den Grundzustand sofort, das heißt zumindest nahezu ohne Zeitverzögerung und insbesondere ohne gezielte Zeitverzögerung geschaltet wird, wenn der Nutzer das Betätigen des Sicherheitsbedienelements beendet beziehungsweise ein Beenden der durch den Nutzer bewirkten Betätigung des Sicherheitsbedienelement erfasst wird. Hierdurch kann ein besonders sicherer Betrieb des Hilfsantriebs realisiert werden.

In weiterer Ausgestaltung der Erfindung wird eine durch den Nutzer bewirkte Betätigung des Sicherheitsbedienelements mittels wenigstens eines Symbols auf der Anzeige des mobilen Endgeräts angezeigt. Mit anderen Worten, wird mittels des mobilen Endgeräts erfasst, dass der Nutzerdas Sicherheitsbedienelement betätigt, so wird das wenigstens eine Symbol auf der Anzeige des mobilen Endgeräts angezeigt. Hierdurch kann dem Nutzer optisch kommuniziert werden, dass er das Sicherheitsbedienelement tatsächlich betätigt. Somit wird dem Nutzer optisch kommuniziert, dass sich das Funktionsbedienelement in dem Aktivzustand befindet und der Nutzer die wenigstens eine Funktion tatsächlich bewirken kann.

Bei der drahtlosen Kommunikationsverbindung handelt es sich beispielsweise um eine Funkverbindung beziehungsweise um eine drahtlose Kommunikationsverbindung über Funktechnik. Insbesondere kann es sich bei der drahtlosen Kommunikationsverbindung um eine Verbindung über Bluetooth, WLAN (Wireless Local Area Network) oder dergleichen handeln. Unter der drahtlosen Kommunikationsverbindung ist zu verstehen, dass das mobile Endgerät nicht etwa über eine physische Leitung mit dem Hilfsantrieb verbunden ist, sondern das mobile Endgerät ist ohne eine solche physische Leitung beispielsweise mittels Funktechnik mit dem Hilfsantrieb verbunden, so dass das mobile Endgerät mit dem Hilfsantrieb über die drahtlose Kommunikationsverbindung beispielsweise Daten drahtlos austauschen kann.

Das Funktionsbedienelement und/oder das Sicherheitsbedienelement kann beispielsweise als mechanisches Bedienelement, insbesondere als Knopf, ausgebildet sein, wobei das mechanische Bedienelement beispielsweise relativ zu einem Gehäuse des mobilen Endgeräts zwischen wenigstens zwei unterschiedlichen Stellungen bewegbar ist. Dabei kann das mechanische Bedienelement insbesondere als Taster ausgebildet sein.

Als besonders vorteilhaft hat es sich jedoch gezeigt, wenn das Funktionsbedienelement als Bedienfläche auf einem berührungsempfindlichen Bildschirm des mobilen Endgeräts bereitgestellt wird. Mittels des berührungsempfindlichen Bildschirms kann beispielsweise eine Annäherung des Nutzers an das mobile Endgerät und insbesondere an den berührungsempfindlichen Bildschirm erfasst werden. Eine solche Annäherung wird beispielsweise erfasst, wenn ein Abstand zwischen dem Nutzer und dem berührungsempfindlichen Bildschirm einen vorgebbaren Schwellenwert unterschreitet, wobei der Nutzer beispielsweise den berührungsempfindlichen Bildschirm berührt. Unterschreitet ein Abstand zwischen dem Nutzer und dem berührungsempfindlichen Bildschirm im Bereich des als Bedienfläche ausgebildeten Funktionsbedienelements den vorgebbaren Schwellenwert beziehungsweise berührt der Nutzer beispielsweise den berührungsempfindlichen Bildschirm im Bereich des als Bedienfläche ausgebildeten Funktionsbedienelements, so wird dadurch eine durch den Nutzer bewirkte Betätigung des Funktionsbedienelements mittels des berührungsempfindlichen Bildschirm erfasst. Hierdurch kann eine sichere und einfache Bedienung des Hilfsantriebs gewährleistet werden.

Ein zweiter Aspekt der Erfindung betrifft ein System zum Antreiben wenigstens eines Rads eines Anhängers, insbesondere eines Wohnwagens, eines Bootsanhängers, eines Verkaufswagens, eines Transportanhängers oder eines Autotransportanhängers. Das System umfasst wenigstens einen Hilfsantrieb zum Antreiben des Rads. Ferner umfasst das System zumindest ein über eine drahtlose Kommunikationsverbindung mit dem Hilfsantrieb verbindbares mobiles Endgerät, welches wenigstens ein Funktionsbedienelement aufweist, mittels welchem wenigstens eine Funktion des Hilfsantriebs von einem Nutzer über das mobile Endgerät und die drahtlose Verbindung bewirkbar ist.

Des Weiteren weist das mobile Endgerät wenigstens ein von dem Funktionsbedienelement unterschiedliches Sicherheitsbedienelement auf, wobei das System dazu ausgebildet ist, das Funktionsbedienelement in Abhängigkeit von wenigstens einer durch den Nutzer bewirkten Betätigung des Sicherheitsbedienelements für das Bewirken der wenigstens einen Funktion freizugeben. Mit anderen Worten ist das System zum Durchführen eines erfindungsgemäßen Verfahrens ausgebildet. Vorteile und Ausgestaltungen des ersten Aspekts der Erfindung sind als Vorteile und Ausgestaltungen des zweiten Aspekts der Erfindung anzusehen und umgekehrt. Somit lässt sich mittels des erfindungsgemäßen Systems ein besonders sicherer Betrieb des Hilfsantriebs realisieren, da der Nutzer nicht nur das Funktionsbedienelement, sondern sowohl das Funktionsbedienelement als auch das Sicherheitsbedienelement betätigen muss, um die wenigstens eine Funktion des Hilfsantriebs tatsächlich zu bewirken.

Erfindungsgemäß ist es vorgesehen, dass das Sicherheitsbedienelement als Bedienfläche auf einem berührungsempfindlichen Bildschirm des mobilen Endgeräts ausgebildet ist. Bei der Erfindung weist das mobile Endgerät eine Anzeige mit wenigstens einem von dem Funktionsbedienelement und von dem Sicherheitsbedienelement unterschiedlichen Anzeigebereich auf. In dem genanten Anzeigebereich ist eine durch den Nutzer bewirkte Betätigung des freigegebenen Funktionsbedienelements mittels wenigstens eines Symbols auf der Anzeige des mobilen Endgeräts anzeigbar. Hierdurch kann ein Nutzer sicher optisch kommuniziert werden, dass die wenigstens eine Funktion des Hilfsantriebs tatsächlich bewirkt. Insbesondere ist es möglich, dem Nutzer die Art der Funktion und somit beispielsweise die durchdie Funktion bewirkte Bewegung des Anhängers optisch mitzuteilen.

Bei einer vorteilhaften Ausführungsform der Erfindung ist das Funktionsbedienelement als Bedienfläche auf einem berührungsempfindlichen Bildschirm des mobilen Endgeräts ausgebildet. Hierdurch kann ein besonders hoher Funktionserfüllungsumfang realisiert werden, da der Bereich der Bedienfläche für unterschiedliche Anzeigen genutzt werden kann. Ferner ist es dadurch möglich, einen besonders sicheren Betrieb zu realisieren, da das Betätigen und das Beenden der Betätigung des Funktionsbedienelements sicher erfasst werden können.

Diese Anzeige ist beispielsweiseder zuvor genannte berührungsempfindliche Bildschirm, welcher üblicherweise auch als Touch-Display oder Touch-Screen bezeichnet wird.

Eine weitere Ausführungsform zeichnet sich dadurch aus, dass die wenigstens eine Funktion als Drehfunktion ausgebildet ist, mittels welcher über den Hilfsantrieb eine Drehung des Anhängers bewirkbar ist, während eine translatorische Bewegung des Anhängers zumindest im Wesentlichen unterbleibt. Dies bedeutet, dass durch die Drehfunktion eine Drehung auf der Stelle bewirkt wird, so dass sich der Anhänger um seine Hochachse beziehungsweise Hochrichtung dreht, ohne sich im Wesentlichen translatorisch, das heißt vor oder zurück zu bewegen. Dadurch kann der Anhänger beispielsweise auf besonders kleinem Raum gedreht und bedarfsgerecht ausgerichtet werden, ohne dass es zu Kollisionen des Anhängers mit anderen Objekten kommt. Somit ist ein besonders sicherer Betrieb realisierbar.

Um den Anhänger mittels der Drehfunktion besonders effektiv auf der Stelle drehen zu können, ist es beispielsweise vorgesehen, dass der Hilfsantrieb bei der Drehfunktion das Rad in eine Drehrichtung antreibt, während ein durch den Hilfsantrieb bewirktes Antreiben eines dem Rad in Querrichtung des Anhängers gegenüberliegenden, zweiten Rades des Anhängers unterbleibt. Dies hat sich als besonders vorteilhaft für mehrachsige Anhänger erwiesen, welche dann mittels der Drehfunktion besonders platzsparend gedreht werden können. Ein solcher mehrachsiger Anhänger weist wenigstens zwei in Fahrzeuglängsrichtung aufeinanderfolgende beziehungsweise hintereinander angeordnete Achsen auf, wobei eine solche Achse wenigstens zwei in Querrichtung des Anhängers gegenüberliegend angeordnete Bodenkontaktelemente in Form von Rädern aufweist.

Außerdem hat es sich als vorteilhaft gezeigt, wenn der Hilfsantrieb bei der Drehfunktion das Rad in eine erste Drehrichtung und ein dem Rad in Querrichtung des Anhängers gegenüberliegendes, zweites Rad in eine der ersten Drehrichtung entgegengesetzte, zweite Drehrichtung antreibt. Dies hat sich als besonders vorteilhaft für einachsige Anhänger gezeigt, wobei ein solcher einachsiger Anhänger genau eine Achse aufweist. Eine solche Achse umfasst wenigstens zwei in Querrichtung des Anhängers und somit in Fahrzeugquerrichtung gegenüberliegend angeordnete Bodenkontaktelemente in Form von Rädern, über welche der Anhänger bei einer Fahrt auf den Boden abrollt.

Eine weitere Ausführungsform zeichnet sich dadurch aus, dass die Funktion als Rangierfunktion ausgebildet ist, bei welcher der Hilfsantrieb das Rad in eine Drehrichtung mit einer ersten Drehzahl und ein dem Rad in Querrichtung des Anhängers gegenüberliegendes, zweites Rad in die Drehrichtung mit einer von der ersten Drehzahl unterschiedlichen, zweiten Drehzahl antreibt, welche größer als Null ist. Mit anderen Worten treibt der Hilfsantrieb die Räder gleichsinnig an, wobei jedoch das erste Rad stärker beziehungsweise mit einer höheren Drehzahl als das zweite Rad angetrieben wird, so dass der Anhänger vorwärts oder rückwärts und dabei jedoch nicht entlang einer geraden Linie, sondern entlang einer Kurve bewegt wird. Dadurch kann der Anhänger besonders einfach rangiert werden. Um den Anhänger besonders einfach rangieren zu können, hat es sich als vorteilhaft gezeigt, wenn die zweite Drehzahl mindestens ein Zehntel und höchstens drei Achtel der ersten Drehzahl beträgt.

Schließlich hat es sich als besonders vorteilhaft gezeigt, wenn der Hilfsantrieb wenigstens eine weitere Funktion aufweist, welche als Antriebsfunktion ausgebildet ist, bei welcher der Hilfsantrieb den Anhänger entlang einer geraden Linie antreibt, indem der Hilfsantrieb die Räder, das heißt das erste Rad und das zweite Rad, mit einer dritten Drehzahl antreibt, die 100% entspricht. Der Anhänger wird somit rückwärts oder vorwärts und dabei zumindest im Wesentlichen entlang einer geraden Linie bewegt. Eine durch den Hilfsantrieb bewirkte Kurvenfahrt des Anhängers unterbleibt.

Im Vergleich zur Antriebsfunktion ist es bei der Rangierfunktion vorgesehen, dass die erste Drehzahl in einem Bereich von einschließlich 80% bis einschließlich 100% der dritten Drehzahl und die zweite Drehzahl in einem Bereich von einschließlich 10% bis einschließlich 30% der dritten Drehzahl liegt. Dadurch kann im Rahmen der Rangierfunktion eine besonders vorteilhafte Kurvenfahrt des Anhängers bewirkt werden.

Die Zeichnung zeigt in:
- Fig. 1: eine schematische Draufsicht eines mobilen Endgeräts zum Betreiben eines Hilfsantriebs nach dem erfindungsgemäßen Verfahren; und
- Fig. 2: eine weitere schematische Draufsicht des mobilen Endgeräts.

In den Figuren sind gleiche oder funktionsgleiche Elemente mit gleichen Bezugszeichen versehen.

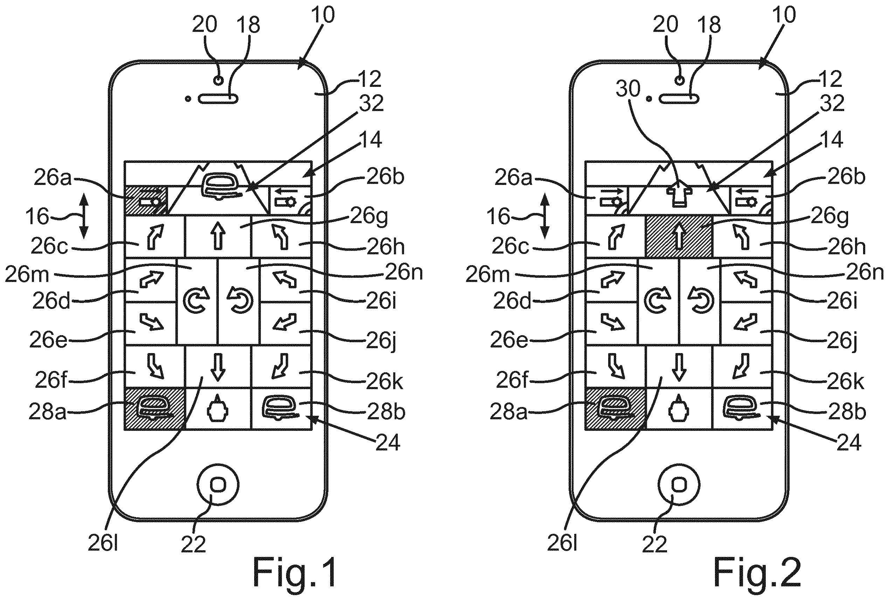

Fig. 1 zeigt in einer schematischen Draufsicht ein im Ganzen mit 10 bezeichnetes mobiles Endgerät, welches vorliegend als mobiles Telekommunikationsendgerät ausgebildet ist. Das mobile Endgerät 10 ist vorliegend als Smartphone und somit zum Aufbauen einer Telefonverbindung über Funktechnik ausgebildet.

Das mobile Endgerät 10 umfasst ein Gehäuse 12 sowie ein Anzeige 14, welche als berührungsempfindlicher Bildschirm ausgebildet ist. Das mobile Endgerät 10 weist eine in Fig. 1 durch einen Doppelpfeil 16 veranschaulichte Hochrichtung auf, wobei bezogen auf diese Hochrichtung über der Anzeige 14 wenigstens ein Lautsprecher 18 zum Wiedergeben von Tönen angeordnet ist. Ferner ist in Hochrichtung des mobilen Endgeräts 10 über dem Lautsprecher 18 eine Kamera 20 zum Erfassen von Bildern angeordnet. Dies bedeutet, dass das mobile Endgerät 10 den Lautsprecher 18 und die Kamera 20 aufweist.

Bezogen auf die Hochrichtung des mobilen Endgeräts 10 ist unter der Anzeige 14 ein Bedienelement 22 des mobilen Endgeräts 10 angeordnet. Das Bedienelement 22 ist dabei als mechanisches Bedienelement ausgebildet, wobei das Bedienelement 22 vorliegend als Taster ausgebildet ist. Dies bedeutet, dass das Bedienelement 22 zwischen einer in Fig. 1 und 2 gezeigten Ausgangsstellung und wenigstens einer von der Ausgangsstellung unterschiedlichen Bedienstellung bewegbar ist. In der Bedienstellung ist im Vergleich zur Ausgangsstellung wenigstens ein zumindest mittelbar an dem Bedienelement 22 abgestütztes Federelement gespannt, so dass das Federelement eine Federkraft bereitstellt, welche auf das Bedienelement 22 in der Bedienstellung wirkt. Beispielsweise kann ein Nutzer und somit eine Person des mobilen Endgeräts 10 das Bedienelement 22 aus der Ausgangsstellung in die Bedienstellung bewegen, wodurch das Federelement gespannt wird. Hierzu beaufschlagt der Nutzer das Bedienelement 22 mit einer Kraft, wobei der Nutzer das Bedienelement 22 beispielsweise drückt. Lässt der Nutzer das Bedienelement 22 los, so kann sich das Federelement wieder entspannen, so dass das Bedienelement 22 mittels der Federkraft aus der Bedienstellung zurück in die Ausgangsstellung bewegt wird. Durch ein solches durch den Nutzer bewirktes Bewegen des Bedienelements 22 aus der Ausgangsstellung in die Bedienstellung kann der Nutzer das mobile Endgerät 10 bedienen, wobei das Bewegen des Bedienelements 22 auch als Betätigen oder Bedienen bezeichnet wird.

Wie im Folgenden noch genauer erläutert wird, wird das mobile Endgerät 10 zum Durchführen eines Verfahrens zum Betreiben eines Hilfsantriebs für einen Anhänger, insbesondere einen Wohnwagen, einen Bootsanhänger, einen Verkaufswagen, einen Transportanhänger oder einen Autotransportanhänger, genutzt. Der Hilfsantrieb ist beispielsweise zumindest mittelbar an einem Rahmen des Anhängers gehalten und weist beispielsweise eine Antriebseinheit mit wenigstens zwei Motoren, insbesondere Elektromotoren, auf. Ferner weist der Hilfsantrieb wenigstens ein Antriebselement insbesondere in Form einer Antriebswalze auf. Der Anhänger weist wenigstens eine Achse auf, welche zwei in Querrichtung beziehungsweise Fahrzeugquerrichtung des Anhängers gegenüberliegend angeordnete Bodenkontaktelemente in Form von Rädern umfasst. Die Räder sind zumindest mittelbar an dem Rahmen des Anhängers gehalten und relativ zu dem Rahmen drehbar, so dass der Anhänger über die Räder auf einem Boden beziehungsweise an einer Fahrbahn abrollen kann. Insbesondere ist jedem Rad der Achse eine Antriebseinheit des Hilfsantriebs zugeordnet.

Die Antriebswalze ist beispielsweise mittels eines ersten der Motoren in Längsrichtung beziehungsweise Fahrzeuglängsrichtung des Anhängers translatorisch zwischen wenigstens einer Gebrauchsstellung und wenigstens einer Nicht-Gebrauchsstellung bewegbar. In der Gebrauchsstellung befindet sich die Antriebswalze in Kontakt beziehungsweise Stützanlage mit dem zugeordneten Rad, wobei die Antriebswalze in Kontakt mit dem zugeordneten Rad gehalten und beispielsweise mittels des ersten Motors gegen das Rad gedrückt wird. Somit wirkt die Antriebswalze in der Gebrauchsstellung mit dem Rad zusammen. Der zweite Motor dient beispielsweise dazu, die Antriebswalze anzutreiben. Befindet sich die Antriebswalze in der Gebrauchsstellung und wird die Antriebswalze mittels des zweiten Motors angetrieben, so wird dadurch das der Antriebswalze zugeordnete Rad angetrieben, das heißt relativ zu dem Rahmen gedreht, wodurch der Anhänger angetrieben beziehungsweise bewegt wird. Dadurch ist es möglich, den Anhänger zu bewegen und insbesondere zu rangieren, wenn der Anhänger nicht mit einer Zugmaschine gekoppelt ist. Ein solcher Zustand, in welcher der Anhänger nicht mit einer Zugmaschine gekoppelt ist, wird auch als abgekoppelter Zustand bezeichnet.

In der Nicht-Gebrauchsstellung ist die Antriebswalze von dem zugeordneten Rad beabstandet, so dass die Antriebswalze nicht mit dem Rad zusammenwirkt. Würde die Antriebswalze in der Nicht-Gebrauchsstellung mittels des zweiten Motors angetrieben werden, so würde dann das zugeordnete Rad nicht angetrieben werden, da die Antriebswalze nicht mit dem zugeordneten Rad zusammenwirkt.

Im Rahmen des Verfahrens stellt das mobile Endgerät 10 eine graphische Benutzeroberfläche 24 (GUI) bereit, mittels welcher der zuvor genannte Nutzer den Hilfsantrieb bedienen kann, so dass der Nutzer den abgekoppelten Anhänger über das mobile Endgerät 10 und den Hilfsantrieb bewegen und somit rangieren kann.

Im Rahmen des Verfahrens wird beziehungsweise ist das mobile Endgerät 10 mit dem Hilfsantrieb über eine drahtlose Kommunikationsverbindung verbunden. Hierzu umfasst das mobile Endgerät 10 ein in den Figuren nicht erkennbares erstes Kommunikationsmodul, wobei der Hilfsantrieb ein in den Figuren nicht erkennbares, zweites Kommunikationsmodul umfasst. Über diese Kommunikationsmodule wird die drahtlose Kommunikationsverbindung zwischen dem Hilfsantrieb und dem mobilen Endgerät 10 aufgebaut, so dass beispielsweise das mobile Endgerät über das erste Kommunikationsmodul Daten an das zweite Kommunikationsmodul und somit den Hilfsantrieb übermitteln kann, wobei der Hilfsantrieb über das zweite Kommunikationsmodul die vom mobilen Endgerät 10 übermittelten Daten empfangen kann. Alternativ oder zusätzlich ist es denkbar, dass der Hilfsantrieb über das zweite Kommunikationsmodul Daten an das erste Kommunikationsmodul und somit das mobile Endgerät 10 übermitteln kann, wobei das mobile Endgerät 10 über das erste Kommunikationsmodul die vom Hilfsantrieb beziehungsweise dem zweiten Kommunikationsmodul übermittelten Daten empfangen kann.

Sind somit die Kommunikationsmodule sowohl zum Senden als auch zum Empfangen der jeweiligen Daten ausgebildet, so ist eine bidirektionale Kommunikation zwischen dem mobilen Endgerät 10 und dem Hilfsantrieb möglich, so dass das mobile Endgerät 10 und der Hilfsantrieb Daten und somit Informationen in beide Richtungen austauschen können. Eine solche drahtlose Kommunikationsverbindung ist vorteilhaft, da der Nutzer dann um den Anhänger herumlaufen und den Anhänger somit besonders gut beobachten kann, während der Nutzer das mobile Endgerät 10 in seinen Händen hält und beispielsweise während der Nutzer den Anhänger über den Hilfsantrieb, die drahtlose Kommunikationsverbindung und das mobile Endgerät 10 rangiert.

Da das mobile Endgerät 10 die graphische Benutzeroberfläche 24 auf der beziehungsweise mittels der Anzeige 14 bereitstellt, weist das mobile Endgerät 10 im Rahmen des Verfahrens die graphische Benutzeroberfläche 24 auf. Die graphische Benutzeroberfläche 24 umfasst eine Mehrzahl von Funktionsbedienelementen 26a-n, mittels welchen jeweils wenigstens eine Funktion des Hilfsantriebs von dem Nutzer über das mobile Endgerät 10 und die drahtlose Kommunikationsverbindung bewirkbar ist. Mit anderen Worten sind mithilfe der Funktionsbedienelemente 26a-n jeweilige, voneinander unterschiedliche Funktionen des Hilfsantriebs bewirkbar.

Die Funktionsbedienelemente 26a, b dienen beispielsweise dazu, die jeweilige, dem jeweiligen Rad zugeordnete Antriebswalze einzuschwenken und auszuschwenken. Unter dem Einschwenken ist die Bewegung der jeweiligen Antriebswalze aus der Nicht-Gebrauchsstellung in die Gebrauchsstellung zu verstehen, wobei unter dem Ausschwenken die umgekehrte Bewegung der Antriebswalze aus der Gebrauchsstellung in die Nicht-Gebrauchsstellung zu verstehen ist. Über die anderen Funktionsbedienelemente 26c-n können unterschiedliche Bewegungen beziehungsweise Fahr- oder Rangiermanöver des Anhängers über den Hilfsantrieb bewirkt werden. Mittels des Funktionsbedienelements 26g wird beispielsweise eine einfache Vorwärtsfahrt des Anhängers bewirkt, ohne dass sich der Anhänger dreht beziehungsweise eine Kurve fährt. Demzufolge wird beispielsweise über das Funktionsbedienelement 26l eine einfache Rückwärtsfahrt des Anhängers bewirkt, ohne dass dieser eine Kurve fährt. Die Funktionsbedienelemente 26c-f und 26h-k dienen dazu, Kurvenfahrten des Anhängers nach vorne beziehungsweise nach hinten zu bewirken, wobei dann der Anhänger beispielsweise jeweilige Kurven mit unterschiedlichen Kurvenradien fährt. Ferner dienen die Funktionsbedienelemente 26m, n zum Bewirken jeweiliger Drehfunktionen des Hilfsantriebs und somit des Anhängers.

Aus Fig. 1 ist erkennbar, dass das jeweilige Funktionsbedienelement 26a-n wenigstens einen Richtungspfeil aufweist, mittels welchem das jeweilige Fahrmanöver, insbesondere die Richtung beziehungsweise Fahrtrichtung des Anhängers bei dem jeweiligen Fahrmanöver, veranschaulicht wird. Dabei sind die Richtungspfeile der Funktionsbedienelemente 26c-f und 26h-k unterschiedlich gekrümmt, um dadurch die zuvor genannten, unterschiedlichen Kurvenradien zu veranschaulichen. Wie durch die Richtungspfeile der Funktionsbedienelemente 26m-n veranschaulicht ist, ist im Rahmen der jeweiligen Drehfunktion eine Drehung auf der Stelle zu verstehen. Mit anderen Worten wird mittels der jeweiligen Drehfunktion über den Hilfsantrieb eine Drehung des Anhängers um dessen Hochrichtung bewirkt, während eine translatorische Bewegung des Anhängers nach vorne oder hinten zumindest im Wesentlichen unterbleibt. Dadurch kann der Anhänger beispielsweise auf sehr engem Raum gedreht beziehungsweise gewendet werden. Dies ist insbesondere bei einem einachsigen Anhänger vorgesehen, wobei der Anhänger genau eine Achse aufweist.

Mittels der Funktionsbedienelemente 26c, h, f und k kann der Nutzer als das jeweilige Fahrmanöver eine Rangierfunktion bewirken, bei welcher der Hilfsantrieb eines der Räder in eine Drehrichtung mit einer ersten Drehzahl und das dem einen Rad in Querrichtung des Anhängers gegenüberliegendes andere Rad in die Drehrichtung mit einer von der ersten Drehzahl unterschiedlichen, zweiten Drehzahl antreibt, welche größer als Null ist. Dabei treibt der Hilfsantrieb beispielsweise das kurvenäußere Rad mit der ersten Drehzahl und das kurveninnere Rad mit der zweiten Drehzahl an, welcher geringer als die erste Drehzahl und größer als Null ist. Vorzugsweise beträgt die zweite Drehzahl mindestens ein Zehntel und höchstens drei Achtel der zweiten Drehzahl. Die oben genannte Vorwärtsfahrt ist beispielsweise eine Antriebsfunktion des Hilfsantriebs. Bei dieser Antriebsfunktion treibt der Hilfsantrieb den Anhänger entlang einer geraden Linie an, indem der Hilfsantrieb die Räder mit einer dritten Drehzahl antreibt, die 100% entspricht. Im Vergleich zu der Antriebsfunktion ist es bei der Rangierfunktion vorgesehen, dass die erste Drehzahl in einem Bereich von einschließlich 80% bis einschließlich 100% der dritten Drehzahl und die zweite Drehzahl in einem Bereich von einschließlich 10% bis einschließlich 30% der dritten Drehzahl liegt. Mit anderen Worten wird beispielsweise das kurvenäußere Rad mit 80% bis 100% der dritten Drehzahl angetrieben, während das kurveninnere Rad mit 10% bis 30% der dritten Drehzahl angetrieben wird. Diese Rangierfunktion ist vorzugsweise bei einem einachsigen Anhänger und bei einem mehrachsigen Anhänger vorgesehen.

Bei einem mehrachsigen Anhänger ist die oben genannte Drehfunktion beispielsweise folgendermaßen ausgebildet: Solange der Nutzer beispielsweise eines der Funktionsbedienelemente 26m, n betätigt hält, wird:
- während einer ersten Zeitspanne ein erstes der Räder mit der ersten Drehzahl in eine erste Drehrichtung und das dem ersten Rad gegenüberliegende, zweite Rad mit der zweiten Drehzahl in die erste Drehrichtung mittels des Hilfsantriebs gedreht,
- während einer sich an die erste Zeitspanne anschließenden, zweiten Zeitspanne das zweite Rad mit der ersten Drehzahl in eine der ersten Drehrichtung entgegengesetzte, zweite Drehrichtung und das erste Rad mit der zweiten Drehzahl in die zweite Drehrichtung mittels des Hilfsantriebs gedreht, und
- während einer sich an die zweite Zeitspanne anschließenden, dritten Zeitspanne das Rad mit der ersten Drehzahl in die erste Drehrichtung und das zweite Rad mit der zweiten Drehzahl in die erste Drehrichtung mittels des Hilfsantriebs gedreht.

Vorzugsweise ist die zweite Zeitspanne länger als die erste und die dritte Zeitspanne, wobei die erste und die dritte Zeitspanne beispielsweise gleichlang sind. Insbesondere dauern die erste Zeitspanne und die dritte Zeitspanne zumindest 5 Sekunden, wobei die zweite Zeitspanne vorzugsweise mindestens 10 Sekunden dauert. Hierdurch kann ein besonders platzsparendes Wenden des mehrachsigen Anhängers realisiert werden. Der Bewegungsablauf dieser Drehfunktion, insbesondere für einen mehrachsigen Anhänger, ist besonders präzise in der EP 1 790 555 A1 beschrieben.

Ferner stellt das mobile Endgerät 10 im Rahmen des Verfahrens zwei voneinander unterschiedliche und von den Funktionsbedienelementen 26a-n unterschiedliche Sicherheitsbedienelemente 28a, b bereit, wobei die Sicherheitsbedienelemente 28a, b ebenfalls Bestandteile der GUI sind und demzufolge auf der Anzeige 14 beziehungsweise mittels dieser angezeigt werden. Die Funktionsbedienelemente 26a-n und die Sicherheitsbedienelemente 28a, b sind im Gegensatz zum Bedienelement 22 nicht etwa mechanische Bedienelemente, sondern Bedienflächen oder Bedienfelder, welche auf dem berührungsempfindlichen Bildschirm (Anzeige 14) bereitgestellt beziehungsweise angezeigt werden. Dies bedeutet, dass die Funktionsbedienelemente 26a-n und die Sicherheitsbedienelemente 28a, b jeweilige Teilbereiche oder Teilflächen der graphischen Benutzeroberfläche 24 sind, wobei diese Teilflächen beziehungsweise Teilbereiche (Funktionsbedienelemente 26a-n und Sicherheitsbedienelemente 28a, b) nebeneinander angeordnet sind und sich somit hinsichtlich ihrer jeweiligen Position auf der Anzeige 14 voneinander unterscheiden. Dabei sind die Sicherheitsbedienelemente 28a, b bezogen auf die Hochrichtung des mobilen Endgeräts 10 unter den Funktionsbedienelementen 26a-n und insbesondere in seitlichen Randbereichen der Anzeige 14 beziehungsweise der graphischen Benutzeroberfläche 24 angeordnet.

Um nun einen besonders sicheren Betrieb des Hilfsantriebs und somit ein sicheres Rangieren des Anhängers mittels des Hilfsantriebs realisieren zu können, sind die Funktionsbedienelemente 26a-n in Abhängigkeit von wenigstens einer durch den Nutzer bewirkten Betätigung des jeweiligen Sicherheitsbedienelements 28a, b für das Bewirken der jeweiligen Funktion freigebbar. Mit anderen Worten ist es im Rahmen des Verfahrens vorgesehen, dass das jeweilige Funktionsbedienelement 26a-n in Abhängigkeit von wenigstens einer durch den Nutzer bewirkten Betätigung des Sicherheitsbedienelements 28a, b für das Bewirken der jeweiligen Funktion freigegeben wird. Um die jeweilige Funktion, das heißt das jeweilige Fahrmanöver des Anhängers mittels des Hilfsantriebs über die drahtlose Kommunikationsverbindung und das mobile Endgerät 10 tatsächlich zu bewirken, muss der Nutzer nicht nur das jeweils entsprechende Funktionsbedienelement 26a-n, sondern auch wenigstens eines der Sicherheitsbedienelemente 28a, b betätigen. Das Betätigen erfolgt derart, dass der Nutzer die Anzeige 14 im Bereich des jeweiligen Funktionsbedienelements 26a-n beziehungsweise im Bereich des jeweiligen Sicherheitsbedienelements 28a, b berührt. Eine solche Berührung zwischen dem Nutzer und der Anzeige 14 wird mittels des berührungsempfindlichen Bildschirms erfasst.

Aus Fig. 1 ist erkennbar, dass das jeweilige Sicherheitsbedienelement 28a, b ein Symbol in Form eines Buchstabens aufweist. Dieser Buchstabe ist vorliegend eine kleines "e". In Fig. 1 und 2 ist das Sicherheitsbedienelement 28a durch den Nutzer betätigt, wobei das Sicherheitsbedienelement 28b nicht durch den Nutzer betätigt, das heißt unbetätigt oder nicht-betätigt ist. In betätigtem Zustand weist das Symbol des Sicherheitsbedienelements 28a, b die gleiche Farbe wie im nicht-betätigten Zustand auf. Sowohl im betätigtem als auch in unbetätigtem Zustand ist das jeweilige Symbol des jeweiligen Sicherheitsbedienelements 28a, b mit einer farbigen Fläche hinterlegt, wobei die Fläche in betätigtem Zustand eine erste Farbe und im nicht-betätigten Zustand eine von der ersten Farbe unterschiedliche, zweite Farbe aufweist. Diese farbige Fläche, deren Farbe in Abhängigkeit von dem Bestätigen des Sicherheitsbedienelements 28a, b verändert wird, ist somit ein Symbol, mittels welchem dem Nutzer optisch kommuniziert wird, dass der Nutzer das Sicherheitsbedienelement 28a, b betätigt beziehungsweise eine solche, durch den Nutzer bewirkte Betätigung des Sicherheitsbedienelements 28a, b erfasst wird.

Analoges trifft auch auf die Funktionsbedienelemente 26a-n zu. Der jeweilige Richtungspfeil weist im betätigten Zustand eine erste Farbe und im nicht-bestätigten Zustand eine von der ersten Farbe, unterschiedliche zweite Farbe auf und ist sowohl im betätigten Zustand als auch im nicht-bestätigtem Zustand mit einer farbigen Fläche hinterlegt, welche in bestätigtem Zustand eine erste Farbe und im nicht-betätigtem Zustand eine von der ersten Farbe unterschiedliche, zweite Farbe aufweist.

Berührt der Nutzer mit seinem Finger beispielsweise die Anzeige 14 im Bereich des Sicherheitsbedienelements 28a, so wird dieses Berühren mittels der Anzeige 14 erfasst und der Nutzer bedient oder betätigt das Sicherheitsbedienelement 28a. In der Folge werden die Funktionsbedienelemente 26a-n freigegeben, so dass dann der Nutzer das jeweilige Fahrmanöver tatsächlich bewirken kann, indem der Nutzer eines der Funktionsbedienelemente 26a-n betätigt, das heißt die Anzeige 14 im Bereich des jeweiligen, gewünschten Funktionsbedienelements 26a-n berührt.

In Fig. 1 ist veranschaulicht, dass der Nutzer das Funktionsbedienelement 26a betätigt beziehungsweise die Anzeige 14 im Bereich des Funktionsbedienelements 26a berührt, um dadurch eine der Antriebswalzen oder beide Antriebswalzen einzuschwenken.

Um einen besonders sicheren Betrieb zu realisieren, ist es im Rahmen des Verfahrens des Verfahrens vorgesehen, dass das jeweilige Funktionsbedienelement 26a-n freigegeben wird, während der Nutzer das jeweilige Sicherheitsbedienelement 28a, b betätigt hält, wobei die Funktionsbedienelemente 26a-n für das Bewirken der jeweiligen Funktionen gesperrt werden, wenn eine durch den Nutzer bewirkte Betätigung der Sicherheitsbedienelemente 28a, b unterbleibt. Dabei werden die Funktionsbedienelemente 26a-n unmittelbar nach einem Beenden einer durch den Nutzer bewirkten Betätigung der Sicherheitsbedienelemente 28a, b gesperrt. Dies bedeutet, dass die Funktionsbedienelemente 26a-n nur dann freigegeben werden, während der Nutzer zumindest eines der Sicherheitsbedienelemente 28a, b betätigt. Während aller Zeitspannen, während welchen eine durch den Nutzer bewirkte Betätigung der Sicherheitsbedienelemente 28a, b unterbleibt, werden die Funktionsbedienelemente 26a-n für das Bewirken der Funktionen gesperrt. Mit anderen Worten, betätigt der Nutzer eines der Funktionsbedienelemente 26a-n, während der Nutzer keines der Sicherheitsbedienelemente 28a, b betätigt, so wird die jeweilige Funktion nicht bewirkt beziehungsweise nicht durch den Hilfsantrieb ausgeführt.

Zum Betätigen des Sicherheitsbedienelements 28a nutzt der Nutzer beispielsweise einen Finger seiner ersten Hand, wobei er zum Betätigen des Funktionsbedienelements 26a einen Finger seiner zweiten Hand nutzt. Dadurch kann sicher vermieden werden, dass die Hände des Nutzers beim Einschwenken der Antriebswalze zwischen diese und das zugeordnete Rad gelangen können, da der Nutzer beide Hände zum Betätigen des Funktionsbedienelements 26a und zum gleichzeitigen Betätigen des Sicherheitsbedienelements 28a am mobilen Endgerät 10 hat.

Beendet der Nutzer das Betätigen des Funktionsbedienelements 26a und/oder beendet der Nutzer das Betätigen des Sicherheitsbedienelements 28a, beziehungsweise wird ein Beenden des durch den Nutzer bewirkten Betätigens des Funktionsbedienelements 26a und/oder des Sicherheitsbedienelements 28a mittels der Anzeige 14 erfasst, so wird die Funktion und vorliegend das Einschwenken der Antriebswalze gestoppt beziehungsweise beendet.

In Fig. 2 ist veranschaulicht, dass der Nutzer eine Vorwärtsfahrt des Anhängers bewirkt. Hierzu betätigt der Nutzer das Funktionsbedienelement 26g, während der Nutzer das Sicherheitsbedienelement 28a betätigt und betätigt hält. Dabei wird sowohl die durch den Nutzer bewirkte Betätigung des Sicherheitsbedienelements 28a als auch die durch den Benutzer bewirkte Betätigung des freigegebenen Funktionsbedienelements 26g mittels wenigstens eines Symbols auf der Anzeige 14 angezeigt, indem die Farbe der Fläche des Sicherheitsbedienelements 28a und die Farben der Fläche und des Richtungspfeils des Funktionsbedienelements 26g im Vergleich zum nicht-betätigten Zustand verändert werden.

Darüber hinaus wird die durch den Nutzer bewirkte Betätigung des freigegebenen Funktionsbedienelements 26g mittels wenigstens eines Symbols 30 in einem von den Funktionsbedienelementen 26a-n und von den Sicherheitsbedienelementen 28a, b unterschiedlichen Bereich 32 der Anzeige 14 beziehungsweise der graphischen Benutzeroberfläche 24 angezeigt. Bei dem Symbol 30 handelt es sich vorliegend um einen Richtungspfeil, welcher die Vorwärtsfahrt charakterisiert. Anhand des Symbols 30 kann der Nutzer auch dann, wenn er das Funktionsbedienelement 26g und das Sicherheitsbedienelement 28a mit seinen jeweiligen Fingern vollständig überdeckt, erkennen, dass die Betätigung des Funktionsbedienelements 26g und des Sicherheitsbedienelements 28a erfolgreich ist und die jeweilige Funktion tatsächlich von dem Hilfsantrieb ausgeführt wird.

Dadurch, dass die Sicherheitsbedienelemente 28a, b bezogen auf die Hochrichtung des mobilen Endgeräts 10 in einem unteren Bereich der Anzeige 14 angeordnet sind, ist eine gute und einfache Bedienung gewährleistet.

Es ist denkbar, dass durch das Betätigen des Sicherheitsbedienelements 28a, b und/oder des jeweiligen Funktionsbedienelements 26a-n wenigstens eine haptische Rückmeldung beziehungsweise ein haptischer Effekt bewirkt wird. Diese haptische Rückmeldung erfolgt beispielsweise dadurch, dass mittels wenigstens eines in den Figuren nicht erkennbaren Vibrationselements des mobilen Endgeräts 10 eine Vibration des mobilen Endgeräts 10, insbesondere über eine vorgebbare Zeitdauer, bewirkt wird, wenn eine durch den Nutzer bewirkte Betätigung eines der Sicherheitsbedienelemente 28a, b und/oder eines der insbesondere freigegebenen Funktionsbedienelemente 26an erfasst wird. Durch diese haptische Rückmeldung kann dem Nutzer auch haptisch kommuniziert werden, dass eine durch den Nutzer bewirkte Betätigung des Sicherheitsbedienelements 28a beziehungsweise des entsprechenden Funktionsbedienelements 26a-n erfolgt beziehungsweise erfasst wird.

Insgesamt ist aus den Figuren erkennbar, dass das Sicherheitsbedienelement 28a beziehungsweise 28b sozusagen als Totmannschalter fungiert, welcher durch den Nutzer betätigt werden muss und betätigt gehalten werden muss, um die Funktionsbedienelemente 26a-n freizugeben und das jeweilige Fahrmanöver tatsächlich bewirken zu können. Dadurch können ungewollte und unbeabsichtigte Bewegungen des Anhängers infolge von ungewollten und unbeabsichtigten Berührungen zwischen dem Nutzer und der Anzeige 14 vermieden werden, wenn der Nutzer beispielsweise das mobile Endgerät 10 in seine Tasche steckt.

Alternativ oder zusätzlich ist es möglich, auf der Anzeige 14 beziehungsweise mittels der graphischen Benutzeroberfläche 24, insbesondere in dem Bereich 32, wenigstens eine einen Zustand des Hilfsantriebs charakterisierende Information anzuzeigen. Im Rahmen der bidirektionalen Kommunikation übermittelt der Hilfsantrieb beispielsweise Daten und somit Informationen über seinen Zustand. Beispielsweise ist es möglich, mittels der graphischen Benutzeroberfläche eine Störung, eine Überhitzung des Hilfsantriebs und/oder eine andere Information über den Hilfsantrieb anzuzeigen.

## Patentansprüche

1. Verfahren zum Betreiben eines Hilfsantriebs für einen Anhänger, insbesondere einen Wohnwagen, einen Bootsanhänger, einen Verkaufswagen, einen Transportanhänger oder einen Autotransportanhänger, bei welchem zumindest ein mit dem Hilfsantrieb über eine drahtlose Kommunikationsverbindung verbundenes mobiles Endgerät (10) wenigstens ein Funktionsbedienelement (26a-n), mittels welchem wenigstens eine Funktion des Hilfsantriebs von einem Nutzer über das mobile Endgerät (10) und die drahtlose Kommunikationsverbindung bewirkbar ist, und wenigstens ein von dem Funktionsbedienelement (26a-n) unterschiedliches Sicherheitsbedienelement (28a,b) bereitstellt, wobei das Funktionsbedienelement (26a-n) in Abhängigkeit von wenigstens einer durch den Nutzer bewirkten Betätigung des Sicherheitsbedienelements (28a,b) für das Bewirken der wenigstens einen Funktion freigegeben wird,
**dadurch gekennzeichnet, dass**
das Sicherheitsbedienelement (28a,b) als Bedienfläche auf einem berührungsempfindlichen Bildschirm (14) des mobilen Endgeräts (10) bereitgestellt wird, wobei eine durch den Nutzer bewirkte Betätigung des freigegebenen Funktionsbedienelements (26a-n) mittels wenigstens eines Symbols (30) auf einer Anzeige (14) des mobilen Endgeräts (10) angezeigt wird, und wobei die durch den Nutzer bewirkte Betätigung des freigegebenen Funktionsbedienelements (26a-n) mittels des wenigstens einen Symbols (30) in einem vom Funktionsbedienelement (26a-n) und vom Sicherheitsbedienelement (28a,b) unterschiedlichen Bereich (32) des mobilen Endgeräts (10) angezeigt wird.

2. Verfahren nach Anspruch 1,
**dadurch gekennzeichnet, dass**
das Funktionsbedienelement (26a-n) freigegeben wird, während der Nutzer das Sicherheitsbedienelement (28a,b) betätigt hält, wobei das Funktionsbedienelement (26a-n) für das Bewirken der wenigstens einen Funktion gesperrt wird, während eine durch den Nutzer bewirkte Betätigung des Sicherheitsbedienelements (28a,b) unterbleibt.

3. Verfahren nach Anspruch 1 oder 2,
**dadurch gekennzeichnet, dass**
das Funktionsbedienelement (26a-n) unmittelbar nach einem Beenden einer durch den Nutzer bewirkten Betätigung des Sicherheitsbedienelements (28a,b) gesperrt wird.

4. Verfahren nach einem der vorhergehenden Ansprüche,
**dadurch gekennzeichnet, dass**
eine durch den Nutzer bewirkte Betätigung des Sicherheitsbedienelements (28a,b) mittels wenigstens eines Symbols auf einer Anzeige (14) des mobilen Endgeräts (10) angezeigt wird.

5. Verfahren nach einem der vorhergehenden Ansprüche,
**dadurch gekennzeichnet, dass**
das Funktionsbedienelement (26a-n) als Bedienfläche auf einem berührungsempfindlichen Bildschirm (14) des mobilen Endgeräts (10) bereitgestellt wird.

6. System zum Antreiben wenigstens eines Rads eines Anhängers, insbesondere eines Wohnwagens, eines Bootsanhängers, eines Verkaufswagens, eines Transportanhängers oder eines Autotransportanhängers, mit wenigstens einem Hilfsantrieb zum Antreiben des Rads, und mit zumindest einem über eine drahtlose Kommunikationsverbindung mit dem Hilfsantrieb verbindbaren mobilen Endgerät (10), welches wenigstens ein Funktionsbedienelement (26a-n), mittels welchem wenigstens eine Funktion des Hilfsantriebs von einem Nutzer über das mobile Endgerät und die drahtlose Verbindung bewirkbar ist, und wenigstens ein von dem Funktionsbedienelement (26a-n) unterschiedliches Sicherheitsbedienelement (28a,b) aufweist, wobei das System dazu ausgebildet ist, das Funktionsbedienelement (26a-n) in Abhängigkeit von wenigstens einer durch den Nutzer bewirkten Betätigung des Sicherheitsbedienelements (28a,b) für das Bewirken der wenigstens einen Funktion freizugeben,
**dadurch gekennzeichnet, dass**
das Sicherheitsbedienelement (28a,b) als Bedienfläche auf einem berührungsempfindlichen Bildschirm (14) des mobilen Endgeräts (10) ausgebildet ist, wobei das mobile Endgerät (10) eine Anzeige (14) mit wenigstens einem von dem Funktionsbedienelement (26a-n) und von dem Sicherheitsbedienelement (28a,b) unterschiedlichen Anzeigebereich (32) aufweist, in welchem eine durch den Nutzer bewirkte Betätigung des freigegebenen Funktionsbedienelements (26a-n) mittels wenigstens eines Symbols (30) auf der Anzeige (14) des mobilen Endgeräts (10) anzeigbar ist.

7. System nach Anspruch 6,
**dadurch gekennzeichnet, dass**
das Funktionsbedienelement (26a-n) als Bedienfläche auf einem berührungsempfindlichen Bildschirm (14) des mobilen Endgeräts (10) ausgebildet ist.

8. System nach einem der Ansprüche 6 oder 7,
**dadurch gekennzeichnet, dass**
die Funktion als Drehfunktion ausgebildet ist, mittels welcher über den Hilfsantrieb eine Drehung des Anhängers bewirkbar ist, während eine translatorische Bewegung des Anhängers unterbleibt.

9. System nach Anspruch 8,
**dadurch gekennzeichnet, dass**
der Hilfsantrieb bei der Drehfunktion das Rad in eine Drehrichtung antreibt, während ein durch den Hilfsantrieb bewirktes Antreiben eines dem Rad in Querrichtung des Anhängers gegenüberliegenden, zweiten Rades unterbleibt.

10. System nach Anspruch 8,
**dadurch gekennzeichnet, dass**
der Hilfsantrieb bei der Drehfunktion das Rad in eine erste Drehrichtung und ein dem Rad in Querrichtung des Anhängers gegenüberliegendes, zweites Rad in eine der ersten Drehrichtung entgegengesetzte, zweite Drehrichtung antreibt.

11. System nach einem der Ansprüche 6 oder 7,
**dadurch gekennzeichnet, dass**
die Funktion als Rangierfunktion ausgebildet ist, bei welcher der Hilfsantrieb das Rad in eine Drehrichtung mit einer ersten Drehzahl und ein dem Rad in Querrichtung des Anhängers gegenüberliegendes, zweites Rad in die Drehrichtung mit einer von der ersten Drehzahl unterschiedlichen, zweiten Drehzahl antreibt, welche größer als Null ist.

12. System nach Anspruch 11,
**dadurch gekennzeichnet, dass**
die zweite Drehzahl mindestens ein Zehntel und höchstens drei Achtel der ersten Drehzahl beträgt.

13. System nach 11 oder 12,
**dadurch gekennzeichnet, dass**
der Hilfsantrieb wenigstens eine weitere Funktion aufweist, welche als Antriebsfunktion ausgebildet ist, bei welcher der Hilfsantrieb den Anhänger entlang einer geraden Linie antreibt, indem der Hilfsantrieb die Räder mit einer dritten Drehzahl antreibt, die 100% entspricht, wobei bei der Rangierfunktion die erste Drehzahl in einem Bereich von einschließlich 80% bis einschließlich 100% der dritten Drehzahl und die zweite Drehzahl in einem Bereich von einschließlich 10% bis einschließlich 30% der dritten Drehzahl liegt.

## Claims

1. A method for operating an auxiliary drive for a trailer, in particular a caravan, a boat trailer, a sales vehicle, a transport trailer or a car transport trailer, in which at least one mobile terminal (10) connected to the auxiliary drive via a wireless communication link provides at least one functional operating element (26a-n), by means of which at least one function of the auxiliary drive can be effected by a user via the mobile terminal (10) via the wireless communication link, and at least one safety operating element (28a,b) different from the functional operating element (26a-n), wherein the functional operating element (26a-n) is enabled depending on at least one actuation of the safety operating element (28a,b) effected by the user for effecting the at least one function,
**characterized in that**
the safety operating element (28a,b) is provided on a touch-sensitive screen (14) of the mobile terminal (10) as an operating surface, wherein an actuation of the enabled functional operating element (26a-n) effected by the user is displayed on a display (14) of the mobile terminal (10) by means of at least one symbol (30), and wherein the actuation of the enabled functional operating element (26a-n) effected by the user is displayed in an area (32) of the mobile terminal (10) different from the functional operating element (26an) and from the safety operating element (28a,b) by means of the at least one symbol (30).

2. The method according to claim 1,
**characterized in that**
the functional operating element (26a-n) is enabled, while the user keeps actuated the safety operating element (28a,b), wherein the functional operating element (26a-n) for effecting the at least one function is disabled, while an actuation of the safety operating element (28a,b) effected by the user is omitted.

3. The method according to claim 1 or 2,
**characterized in that**
the functional operating element (26a-n) is disabled immediately after terminating an actuation of the safety operating element (28a,b) effected by the user.

4. The method according to any one of the preceding claims,
**characterized in that**
an actuation of the safety operating element (28a,b) effected by the user is displayed on a display (14) of the mobile terminal (10) by means of at least one symbol.

5. The method according to any one of the preceding claims,
**characterized in that**
the functional operating element (26a-n) is provided as an operating surface on a touch-sensitive screen (14) of the mobile terminal (10)

6. A system for driving at least one wheel of a trailer, in particular of a caravan, a boat trailer, a sales vehicle, a transport trailer or a car transport trailer, with at least one auxiliary drive for driving the wheel, and with at least one mobile terminal (10) connectable to the auxiliary drive via a wireless communication link, which comprises at least one functional operating element (26a-n), by means of which at least one function of the auxiliary drive can be effected by a user via the mobile terminal and the wireless link, and at least one safety operating element (28a,b) different from the functional operating element (26a-n), wherein the system is formed to enable the functional operating element (26a-n) depending on at least one actuation of the safety operating element (28a,b) effected by the user for effecting the at least one function,
**characterized in that**
the safety operating element (28a,b) is formed as an operating surface on a touch-sensitive screen (14) of the mobile terminal (10), wherein the mobile terminal (10) comprises a display (14) with at least one display area (32) different from the functional operating element (26a-n) and from the safety operating element (28a,b), in which an actuation of the enabled functional operating element (26a-n) effected by the user can be displayed on the display (14) of the mobile terminal (10) by means of at least one symbol (30).

7. The system according to claim 6,
**characterized in that**
the functional operating element (26a-n) is formed as an operating surface on a touch-sensitive screen (14) of the mobile terminal (10).

8. The system according to any one of claims 6 or 7,
**characterized in that**
the function is formed as a rotational function, by means of which a rotation of the trailer can be effected via the auxiliary drive, while a translational movement of the trailer is omitted.

9. The system according to claim 8,
**characterized in that**
in the rotational function, the auxiliary drive drives the wheel in a rotational direction, while a drive of a second wheel opposing the wheel in transverse direction of the trailer effected by the auxiliary drive is omitted.

10. The system according to claim 8,
**characterized in that**
in the rotational function, the auxiliary drive drives the wheel in a first rotational direction and a second wheel opposing the wheel in transverse direction of the trailer in a second rotational direction opposite to the first rotational direction.

11. The system according to any one of claims 6 or 7,
**characterized in that**
the function is formed as a maneuvering function, in which the auxiliary drive drives the wheel in a rotational direction with a first rotational speed and a second wheel opposing the wheel in transverse direction of the trailer in the rotational direction with a second rotational speed different from the first rotational speed, which is greater than zero.

12. The system according to claim 11,
**characterized in that**
the second rotational speed is at least one tenth and at most three eighths of the first rotational speed.

13. The system according to claim 11 or 12,
**characterized in that**
the auxiliary drive comprises at least one further function, which is formed as a drive function, in which the auxiliary drive drives the trailer along a straight line **in that** the auxiliary drive drives the wheels with a third rotational speed, which corresponds to 100 %, wherein the first rotational speed is in a range of 80 % inclusive to 100 % inclusive of the third rotational speed and the second rotational speed is in a range of 10 % inclusive to 30 % inclusive of the third rotational speed in the maneuvering function.

## Revendications

1. Procédé pour faire fonctionner une propulsion auxiliaire pour une remorque, en particulier une caravane, une remorque à bateaux, un véhicule de vente, une remorque de transport ou une remorque porte-voitures, pour lequel au moins un équipement terminal mobile (10), relié à la propulsion auxiliaire par l'intermédiaire d'une liaison de communication sans fil, met à disposition au moins un élément de commande fonctionnel (26a-n), au moyen duquel au moins une fonction de la propulsion auxiliaire peut être exécutée par un utilisateur par l'intermédiaire de l'équipement terminal mobile (10) et de la liaison de communication sans fil, et au moins un élément de commande de sécurité (28a, b), différent de l'élément de commande fonctionnel (26a-n), l'élément de commande fonctionnel (26a-n) étant débloqué en fonction d'au moins un actionnement, effectué par l'utilisateur, de l'élément de commande de sécurité (28a, b), pour l'exécution de la au moins une fonction,
**caractérisé en ce que**
l'élément de commande de sécurité (28a, b) est fourni sous forme de surface de commande sur un écran tactile (14) de l'équipement terminal mobile (10), un actionnement, effectué par l'utilisateur, de l'élément de commande fonctionnel débloqué (26a-n) étant affiché au moyen d'au moins un symbole (30) sur un affichage (14) de l'équipement terminal mobile (10), et l'actionnement, effectué par l'utilisateur, de l'élément de commande fonctionnel débloqué (26a-n) étant affiché au moyen du au moins un symbole (30) dans une zone (32), différente de l'élément de commande fonctionnel (26an) et de l'élément de commande de sécurité (28a, b), de l'équipement terminal mobile (10).

2. Procédé selon la revendication 1,
**caractérisé en ce que**
l'élément de commande fonctionnel (26a-n) est débloqué tandis que l'utilisateur maintient l'élément de commande de sécurité (28a, b) actionné, l'élément de commande fonctionnel (26a-n) étant bloqué pour l'exécution de la au moins une fonction, tandis que cesse un actionnement, effectué par l'utilisateur, de l'élément de commande de sécurité (28a, b).

3. Procédé selon la revendication 1 ou 2,
**caractérisé en ce que** l'élément de commande fonctionnel (26a-n) est bloqué immédiatement après la fin d'un actionnement, effectué par l'utilisateur, de l'élément de commande de sécurité (28a, b).

4. Procédé selon l'une des revendications précédentes,
**caractérisé en ce**
**qu'**un actionnement, effectué par l'utilisateur, de l'élément de commande de sécurité (28a, b) est affiché au moyen d'au moins un symbole sur un affichage (14) de l'équipement terminal mobile (10).

5. Procédé selon l'une des revendications précédentes,
**caractérisé en ce que**
l'élément de commande fonctionnel (26a-n) est fourni sous forme de surface de commande sur un écran tactile (14) de l'équipement terminal mobile (10).

6. Système pour entraîner au moins une roue d'une remorque, en particulier d'une caravane, d'une remorque à bateaux, d'un véhicule de vente, d'une remorque de transport ou d'une remorque porte-voitures, avec au moins une propulsion auxiliaire, destinée à entraîner la roue et avec au moins un équipement terminal mobile (10), pouvant être relié à la propulsion auxiliaire par l'intermédiaire d'une liaison de communication sans fil, lequel système comporte au moins un élément de commande fonctionnel (26a-n), au moyen duquel au moins une fonction de la propulsion auxiliaire peut être exécutée par un utilisateur par l'intermédiaire de l'équipement terminal mobile et de la liaison sans fil, et au moins un élément de commande de sécurité (28a, b), différent de l'élément de commande fonctionnel (26a-n), le système étant constitué pour débloquer l'élément de commande fonctionnel (26a-n), en fonction d'au moins un actionnement, effectué par l'utilisateur, de l'élément de commande de sécurité (28a, b), pour l'exécution de la au moins une fonction,
**caractérisé en ce que**
l'élément de commande de sécurité (28a, b) est réalisé sous forme de surface de commande sur un écran tactile (14) de l'équipement terminal mobile (10), l'équipement terminal mobile (10) comporte un affichage (14) avec au moins une zone d'affichage (32), différente de l'élément de commande fonctionnel (26a-n) et de l'élément de commande de sécurité (28a, b), dans laquelle un actionnement, effectué par l'utilisateur, de l'élément de commande fonctionnel débloqué (26a-n) peut être affiché au moyen d'au moins un symbole (30) sur l'affichage (14) de l'équipement terminal mobile (10).

7. Système selon la revendication 6,
**caractérisé en ce que**
l'élément de commande fonctionnel (26a-n) est réalisé sous forme de surface de commande sur un écran tactile (14) de l'équipement terminal mobile (10).

8. Système selon l'une des revendications 6 ou 7,
**caractérisé en ce que**
la fonction est réalisée sous forme de fonction de rotation, au moyen de laquelle une rotation de la remorque peut être effectuée par l'intermédiaire de la propulsion auxiliaire, tandis que cesse un mouvement de translation de la remorque.

9. Système selon la revendication 8,
**caractérisé en ce que**
la propulsion auxiliaire entraîne la roue, en ce qui concerne la fonction de rotation, dans un sens de rotation, tandis que cesse un entraînement, réalisé par la propulsion auxiliaire, d'une seconde roue, opposée à la roue dans le sens transversal de la remorque.

10. Système selon la revendication 8,
**caractérisé en ce que**
la propulsion auxiliaire entraîne la roue, en ce qui concerne la fonction de rotation, dans un premier sens de rotation et une seconde roue, opposée à la roue dans le sens transversal de la remorque, dans un second sens de rotation, opposé au premier sens de rotation.

11. Système selon l'une des revendications 6 ou 7,
**caractérisé en ce que**
la fonction est réalisée sous forme de fonction de manoeuvre, pour laquelle la propulsion auxiliaire entraîne la roue dans un sens de rotation avec une première vitesse de rotation et une seconde roue, opposée à la roue dans le sens transversal de la remorque, dans le sens de rotation avec une deuxième vitesse de rotation, différente de la première vitesse de rotation, laquelle deuxième vitesse est supérieure à zéro.

12. Système selon la revendication 11,
**caractérisé en ce que**
la deuxième vitesse de rotation est égale à au moins un dixième et au plus trois huitièmes de la première vitesse de rotation.

13. Système selon la revendication 11 ou 12,
**caractérisé en ce que**
la propulsion auxiliaire comporte au moins une autre fonction, qui est réalisée sous forme de fonction d'entraînement, pour laquelle la propulsion auxiliaire entraîne la remorque le long d'une ligne droite, la propulsion auxiliaire entraînant les roues avec une troisième vitesse de rotation, qui correspond à 100 %, la première vitesse de rotation se situant, en ce qui concerne la fonction de manoeuvre, dans une plage de 80 % inclus jusqu'à 100 % inclus de la troisième vitesse de rotation et la deuxième vitesse de rotation dans une plage de 10 % inclus jusqu'à 30 % inclus de la troisième vitesse de rotation.
